# EUROPEAN PATENT SPECIFICATION

(11) **EP 0 382 838 B1**
(45) Date of publication and mention of the grant of the patent: **15.04.1998**
(21) Application number: 89909494.0
(22) Date of filing: 10.08.1989
(51) Int. Cl.: H04N 9/24

(54) **METHODS AND APPARATUS FOR IMPROVING CATHODE RAY TUBE IMAGE QUALITY**
VERFAHREN UND VORRICHTUNG ZUR VERBESSERUNG DER KATHODENSTRAHLRÖHRENBILDQUALITÄT
PROCEDE ET APPAREIL POUR AMELIORER LA QUALITE DE L'IMAGE D'UN TUBE A RAYONS CATHODIQUES

(30) Priority: 12.08.1988 US 231770
(43) Date of publication of application: 22.08.1990
(73) Proprietor: INNOVATIVE SOLUTIONS& SUPPORT, INCORPORATED, Malverne, PA 19355-1337 (US)
(72) Inventor: HEDRICK, Geoffrey, Malverne, PA 19355 (US)
(74) Representative: Gustorf, Gerhard, Dipl.-Ing.
(86) International application number: US8903423
(87) International publication number: WO9001791

(56) References cited:
- EP-A- 0 172 722
- EP-A- 0 310 006
- GB-A- 2 102 258
- US-A- 4 352 047
- US-A- 4 369 396
- IBM TECHNICAL DISCLOSURE BULLETIN, vol. 24, no. 3, August 1981, pages 1516-1518, New York, US; J.G. AXFORD: "Beam position feedback and correlation in a multibeam CRT"

## Description

The present invention relates to an apparatus and its use for creating an image of enhanced quality on an imaging screen of a cathode ray tube and to a method for correcting misconvergence of a plurality of substantially continuously moving scanning electron beams as set forth in claim 21.

### Background of the Invention

In the operation of conventional cathode ray tubes (CRT's), such for example as those utilized in television receivers and monitors, an image is created by generating one (for monochrome images) or a plurality (for color tubes) of modulated electron beams and continuously sweeping the beams across an imaging screen to thereby selectively excite the phosphors or other coatings on the screen. Scanning movement of the beam(s) about the imaging screen is effected by the application of time-varying control voltages to horizontal and vertical deflection coils or yokes. Beam focusing is carried out by applying suitable control voltages to one or, more typically, to a plurality of generally electrostatic lens elements. In color CRT's, convergence of the plural beams at a shadow mask or other screen grid disposed closely proximate the imaging screen is controlled by time-varying voltages applied to electrostatic deflection electrodes or to electromagnetic convergence coils, depending on the tube design.

Each of these electron beam controlling devices in a cathode ray tube directly affects the quality of the images generated on the imaging screen by operatively adjusting one or more parameters or affecting one or more characteristics of the image. The focusing or lens elements directly control the sharpness or definition of the image. The convergence electrodes or coils, by appropriately deflecting each of the plural electron beams to a dynamically-moving common point at the shadow mask, assure that each beam excites its respective color phosphor pixels and, therefore, provide proper color registration in the resulting image. And the deflection coils -- particularly though not exclusively the horizontal sweep or deflection coils -- must continuously move the electron beam(s) across the imaging screen at a constant linear velocity to avoid geometric distortion of the screen-generated images.

One of the major difficulties inherent in maintaining such image quality-affecting aspects as proper electron beam focus, convergence and sweep linearity is the constantly changing path length of the beam as it scans across the imaging screen. As is well understood by those skilled in the art the distance from the electron beam focusing lens elements to the imaging screen is constantly changing during operation of the tube and is significantly greater at the peripheral extremes of the screen than at its center. This dynamically-changing path length requires constant adjustment of, for example, the focal length of the beam(s), the convergence bias on the beams in a color tube, and the linear velocity of the vertical and, in particular, of the horizontal deflection sweeps. Although it is known, for this purpose, to apply time-varying correction voltages to these components of a CRT, such adjustments are typically based on the calculated, anticipated positions of the scanning beam -- derived for example as a function of time and set, once, at the time of manufacture or initial tube alignment -- rather than on the sensed, actual position of the beam as it sweeps across the imaging screen. Moreover, such currently practiced adjustments -- sometimes referred to as digital dynamic focus and convergence -- provide only gross corrections over relatively large areal zones, as for example defined by a 16 by 16 matrix over the entire imaging screen. Neither do heretofore known arrangements provide compensation for the effects of component aging or the like, or for more than relatively small deviations in focus and convergence, other than through the ability to effect periodic manual adjustments which, typically, must be performed by skilled service personnel. And no currently known CRT imaging systems of this type can or do provide closed loop, real time correction of focus, or convergence, or beam sweep linearity, or any other parameters that affect the quality or clarity of images produced on the imaging screen of the tube.

### Objects of the Invention

It is accordingly the desideratum of the invention to provide apparatus and methods for developing a time-varying signal as an electron beam sweeps across the imaging screen of a cathode ray tube, which signal may be applied to at least one beam or image-affecting element of the tube for improving the quality of an image operatively produced on the screen.

It is a particular object of the invention to provide apparatus and methods for developing such a time-varying signal within and for applying the signal to elements of a substantially conventional cathode ray tube.

It is a further object of the invention to provide apparatus and methods for developing such a time-varying signal and for using the signal to substantially eliminate geometric distortion of images produced on the tube screen.

It is another object of the invention to provide apparatus and methods for developing such a time-varying signal and for using the signal to dynamically correct misfocusing of the electron beam on the imaging screen of the tube.

A further object of the invention is to provide apparatus and methods for developing such a time-varying signal and for using the signal to dynamically correct and improve the accuracy of beam convergence in a plural beam cathode ray tube.

Still another object of the invention is to provide apparatus and methods for developing such a time-varying signal and for using the signal to continuously determine the actual position of the electron beam as the beam is swept along and about the imaging screen of the tube.

Yet a further object of the invention is to provide apparatus and methods for developing such a time-varying signal and for using the signal to eliminate currently conventional overscanning of the imaging screen wherein peripheral portions of the video image information are lost to the viewer of the tube screen.

Another object of the invention is to provide apparatus and methods for developing such a time-varying signal in a single beam, monochrome cathode ray imaging tube.

These and other objects are achieved by the apparatus and its use according to claims 1 and 18 and the method according to claim 21. The dependent claims describe particular embodiments of the invention. The features of the present invention will become apparent from the following detailed description considered in connection with the accompanying drawings. It is to be understood, however, that the drawings are designed solely for purposes of illustration and not as a definition of the limits of the invention, for which referecne should be made to the appended claims.

### Brief Description of the Drawing

In the drawing, wherein similar reference characters denote similar elements throughout the several views:
FIG. 1 is a cross-sectional, diagrammatic view of a single-gun, plural-beam-type color television cathode ray tube in accordance with the present invention;
FIG. 2 is a cross-sectional, diagrammatic, partial view of a modification of the tube of FIG. 1 in accordance with the invention;
FIG. 3 is a schematic, generally block diagram circuit in accordance with the invention;
FIG. 4 is another schematic block diagram circuit in accordance with the invention; and
FIG. 5 is an elevated perspective view of a monochrome cathode ray tube imaging screen modified in accordance with the invention.

### Detailed Description of the Preferred Embodiments

The present invention provides methods and apparatus for improving the quality of images produced on the imaging screen of a cathode ray tube (CRT) such as is commonly used in television receivers, computer monitors and other imaging devices. For purposes of illustration, the invention is herein disclosed, and various preferred embodiments thereof are described, in conjunction with a single-gun, plural-beam-type color television tube. In such single-gun color tubes, three electron beams representing different color signals are formed and directed along separate paths by a common lens, following which two of the beams diverge, are subsequently reconverged at a common point at a beam-selecting grid or mask and then diverge again to impinge on the respective color phosphors which together represent a color picture element on the imaging screen. Nevertheless, those skilled in the art will readily appreciate that the methods and apparatus of, and the concepts underlying, the present invention are equally applicable to other color-imaging systems and, in particular, to cathode ray tubes of alternate configurations such, for example, as so-called delta-type tubes and multi-gun in-line tubes, the required modifications for these and other alternate applications being well within the mechanical skill of the ordinary practitioner. Indeed, as hereinafter disclosed the invention may also be applied to suitably modified single-beam monochrome cathode ray tubes to enhance the quality of monochrome images generated on the tube screen. All such modifications and alternate applications are within the intended scope of the claims.

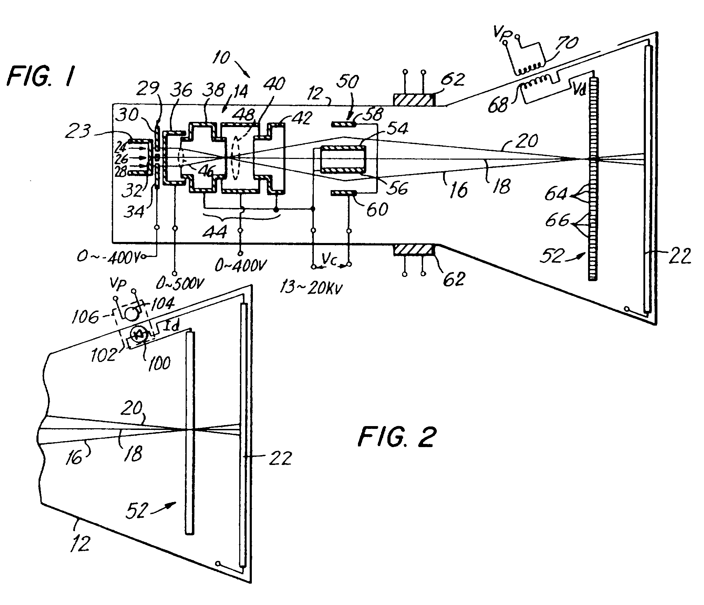

Reference is now made to FIG. 1 which semi-schematically depicts a single-gun, plural-beam-type color television cathode ray tube 10 of generally conventional construction but incorporating a modification, hereinafter described, in accordance with the improvement of the present invention. An envelope 12 of glass or other electrically nonconductive material encloses a plurality of operating components of the CRT including an electron gun 14 for generating "red", "green" and "blue" signal electron beams 16, 18, 20 respectively which are directed toward a target or imaging screen 22 typically coated with color phosphors or the like as is well known in the art. Screen 22 is for example comprised of a successive arrangement of sets of "red", "green" and "blue" phosphor stripes or, in some tube constructions, dots, each of these sets constituting a color picture element on the imaging screen.

Gun 14 includes a cathode 23 having electron beam generating sources 24, 26, 28 and a first control grid 29 formed of separate grid members 30, 32, 34 for the respective beams 16, 18, 20. Grid members 30, 32, 34 are supported in slightly spaced, opposed relationship with the electron-emitting end surface of the cathode 23. The first control grid 29 performs the intensity modulation function and therefore has a signal voltage applied thereto. Thus, the "red", "green" and "blue" video signals are applied between the cathode 23 and the first control grid members 30, 32, 34 to modulate the respective beams 16, 18, 20 emanating from the cathode. A second, common control grid 36 is disposed in slightly spaced, opposed relationship with first grid members 30, 32, 34, and both the first and second control grids have respectively aligned apertures defined therein which serve the conventional beamforming function in the normal operation of the tube 10. The final operating elements of the electron gun 14 are a sequential series of axially arranged, open-ended tubular grids or electrodes 38, 40, 42 which collectively define an electrostatic lens 44 for selective focusing of the beams 16, 18, 20.

By applying appropriate voltages to the first and second control grids 29, 36 and to the electrodes 38, 40, 42, electron lens fields are formed whereby the beams 16, 18, 20 generated at cathode 23 are selectively directed through the control grid apertures and the focusing electrodes toward the phosphor-coated imaging screen 22. The second control grid 36 and first electrode 38 cooperate to form a relatively weak auxiliary lens 46 by which the initially substantially parallel beams are made to converge at the optical center of a main lens 48 formed by the voltage distribution across the electrodes 38, 40, 42. Main lens 48 further serves to focus the plural electron beams 16, 18, 20 upon the imaging screen 22 on the faceplate of the tube 10. Typical voltage ranges for the various elements of the electron gun 14 are indicated, each with reference to the cathode voltage, in FIG. 1. By way of example, at one instant of tube operation the bias voltages applied to cathode 23, to control grids 29 and 36 and to focusing electrodes 38, 40, 42 may be 100 volts, 0 volts, 300 volts, 20 kilovolts, 200 volts and 20 kilovolts, respectively.

After the plural beams 16, 18, 20 leave main lens 48, the center beam 18 continues in a straight line coincident with the optical axis of the lens. The beams 16, 20, on the other hand, diverge away from the center beam 18. Accordingly, a convergence deflection assembly 50 is provided for the purpose of converging the outer beams to intersect with the center beam at a common spot so that all three beams pass through the same aperture of a beam-selecting screen grid or mask 52. Thereafter, the beams 16, 20 again diverge from the mask so that the "red" signal beam 16 goes on to strike the "red" phosphor stripe, the "green" signal beam 18 goes on to strike the "green" phosphor stripe, and the "blue" signal beam 20 goes on to strike the "blue" phosphor stripe of a common picture element on imaging screen 22. With accurate convergence of the electron beams 16, 18, 20, the combination of the three beams -- intensity modulated by the respective "red", "green" and "blue" video signals -- striking their respective phosphor stripes of a common picture element creates a portion of an image having proper registration and the appropriate color value.

Convergence assembly 50 is formed of a pair of shielding electrodes or plates 54, 56 disposed in spaced, opposed relationship about the optical axis of lens 48, and a pair of beam-converging deflector plates or electrodes 58, 60 supported in diametrically outwardly spaced, respectively opposed relation to the outer surfaces of shielding plates 54, 56. A voltage equal to the voltage applied to the electrodes 38, 42, generally at or near the anode potential of the tube 10, is applied to the shielding plates 54, 56, and a voltage which is lower by, for example, approximately 200 to 300 volts than the potential on the shielding plates is applied to the deflection plates 58, 60. Thus, a voltage difference or beam-deflecting potential V_{c} is applied between each of the plates 54, 58 and the plates 56, 60.

The shielding and deflector plates of the convergence assembly 50 are positioned within the tube envelope 12 so that the center or "green" signal beam passes between the inner shielding plates 54, 56 and the outer or "red" and "blue" signal beams 16, 20 pass between the opposed plates 56, 60 and 54, 58, respectively. Since the shielding plates 54, 56 are at the same potential, electron beam 18 is not deflected as it passes therebetween. The existence of the deflecting voltage V_{c} whereby the inner shielding plates 54, 56 are maintained at a higher potential than either of the outer plates 58, 60 does, however, function to inwardly deflect the electron beam 16 as it passes between plates 56, 60 and to inwardly deflect the electron beam 20 as it passes between the plates 54, 58. The potential difference V_{c} thus imparts the requisite deflecting action to the outer electron beams 16, 20 whereupon, by appropriate selection of the voltage V_{c}, the electron beams may be directed in the depicted converging manner to impinge on a single picture element on the color phosphor imaging screen 22.

In the operation of the tube 10, the beams 16, 18, 20 are swept horizontally and vertically across the screen 22 to produce the usual cathode ray tube raster. In FIG. 1, the beams are continuously swept from one extremity of the imaging screen to the other. The horizontal and vertical deflections of the beams necessary to produce the picture raster are typically, as is well understood, electromagnetically accomplished by the application of time-varying potentials to conventional sweep deflection coils or yokes 62 generally mounted about the exterior neck of the tube envelope 12 between the convergence assembly 50 and the screen grid 52.

The screen grid or mask 52 is fixedly supported within the tube envelope 12 between the convergence assembly 50 and the imaging screen 22 in closely proximate, confrontingly spaced relation to the imaging screen and, therefore, in the path of the sweeping or scanning electron beams. The screen grid includes a plurality of apertures defined therethrough aligned with corresponding picture elements on the imaging screen 22. The placement of these apertures is intended to assure -- with proper alignment of the electron gun 14, the screen grid 52 and the imaging screen 22, and with accurate convergence of the plural beams 16, 18, 20 -- that each electron beam will land only on its respective vertical phosphor stripe on the imaging screen. The shape of the screen grid apertures varies for different tube types and configurations and may, by way of example, be cross-sectionally circular or form elongated slots. In single-gun, plural-beam-type CRT's such as the tube 10 illustrated in FIG. 1 the screen grid comprises a plurality of vertically-disposed strips or wires 64 defining vertically-disposed slots 66 therebetween. The improvement of the present invention is effective, however, without regard to the particular construction of the screen grid or the shape or form of its beam-selecting apertures. In this disclosure, therefore, the terms "screen grid" and "aperture grid", which are used for convenience and by way of example, should be understood as including these and all other alternate configurations and constructions of the beam-selecting grid or mask and are fully intended to be interpreted in a broad rather than a limiting sense.

Thus, as the scanning electron beams 16, 18, 20 are continuously swept across the screen grid 52 they pass through successive screen grid apertures 66 to impinge and thereby create an image on the imaging screen 22 by selective, modulated excitation of the color phosphors on the imaging screen. In sweeping across grid 52 the beams are at least partly intercepted by the screen grid strips or wires 64 and are thereby at least partly prevented from impinging on the imaging screen 22 by the strips or wires 64 intermediate successive grid apertures 66. In practice, this is true even if the beams are turned off or blanked between the plural scanned locations corresponding to the beam-selecting screen grid apertures.

The color-imaging cathode ray tube 10 as thus far described is substantially conventional. In accordance with the present invention, a sensing means or device -- preferably a current sensing means -- is connected between the aperture grid 52 and imaging screen 22 and the screen is, in turn, connected to the high voltage source or anode potential of the tube. As a consequence, any electrons that hit or impinge on the grid wires 64 as the beams are swept across the imaging screen will return to the high voltage supply through the current sensing device. In one currently preferred embodiment of the invention illustrated in FIG. 1, the current sensing device comprises a coil 68 although those skilled in the art will readily appreciate that numerous alternate implementations thereof may be employed. The use of a coil, however, provides certain noteworthy advantages.

In a particularly preferred form of this embodiment of the invention, coil 68 may comprise a so-called pot-core transformer wherein the coil is wound in and about a typically annular core of ferrite material or the like. Such coils are advantageously self-shielding and are therefore especially effective in implementing the methods and apparatus of the invention without undue interference from the substantial magnetic fields normally present and operatively generated within the tube 10. Coil 68 is preferably supported or otherwise disposed closely proximate the interior surface of the tube envelope 12 and may, for example, be adhesively secured or otherwise affixed directly to the interior envelope wall at a location between the sweep coils 62 and the aperture grid 52.

As the electron beams 16, 18, 20 are operatively swept across the grid 52 and the imaging screen 22 a time-varying, substantially periodic current flow I_{d} is induced through the current sensing coil 68 as electrons striking the aperture grid are returned to the high voltage source through the coil. This time-varying current results in a correspondingly time-varying voltage differential V_{d} across the coil. Voltage V_{d} (and, similarly, the currrent I_{d}) has the general form of a somewhat truncated sine wave which varies between a minimum voltage V_{dmin} when the scanning electron beams successively pass through each of the screen grid apertures 66, and a maximum voltage V_{dmax} as the swept beams are at least partly intercepted by the grid wires 64 intermediate successive apertures 66 whereby the electrons striking the grid wires are returned through coil 68 to the high voltage supply.

Those skilled in the art will appreciate that optimization of the quality of an image generated on the tube screen 22 requires minimized -- and ideally no -- interception of any part of the electron beams by the grid wires 64 as the beams successively pass through each screen grid aperture 66. For example, a misfocused beam passing through a screen grid aperture 66 will impinge on the immediately adjacent grid wires 64 to a greater extent than a properly focused beam. Similarly, misconvergence of the plural color tube beams at a grid aperture results in greater impingement of one or more of the beams on the adjacent grid wires than does accurately converged beams. These conditions of improved image quality may be attained by dynamically adjusting, for example, the focus and convergence of the beams so that the value of V_{d} is minimized as the swept beams project through each screen grid aperture 68 to excite the phosphor stripes at a respective picture element location. This adjustment may also be defined as an effort to maximize the difference between the minimum voltage V_{dmin} (as the beams successively pass through the grid apertures 66) and the maximum voltage V_{dmax} (as the beams are swept between successive apertures and impinge on the grid wires 64).

In the FIG. 1 embodiment of the invention, the sensing means further comprises a pick-up coil 70 -- which may also, advantageously, be implemented with a pot-core transformer or the like -- disposed proximate, preferably closely proximate or immediately adjacent, the exterior surface of the tube envelope 12 and, in any event, sufficiently proximate sensing coil 68 so that the time-varying current flow through and voltage V_{d} across coil 68 electromagnetically induces a correspondingly time-varying current in and voltage Vₚ across the pick-up coil 70. Sensing coil 68 is thus coupled to the pick-up coil, in the manner of the primary and secondary windings of a transformer, through the insulating and physically-separating glass wall of the tube envelope 12. In addition to advantageously electrically isolating the control signal Vₚ from the time-varying signal V_{d} and, more importantly, from the high voltages present within the tube, use of the FIG. 1 illustrated electromagnetically-coupled two-coil sensing arrangement enables predetermined scaling of the relative magnitude of the control signal Vₚ by appropriate selection of the winding or turns ratio of the coils 68, 70. Of course other, modified or substantially different arrangements for deriving or developing a control signal from the time-varying signal induced in a sensing means connecting the aperture grid 52 and imaging screen 22 may alternatively be employed within the scope of the claims.

For example, FIG. 2 illustrates another currently preferred, alternate implementation of a current sensing device connecting the screen grid 52 and imaging screen 22 for developing the time-varying, periodic control signal Vₚ as the beams are operatively swept across the grid. As there shown, the coil 68 of FIG. 1 may be replaced by a light emitting diode (LED) 100 connecting the grid 52 and screen 22. LED 100 is mounted in close proximity, preferably immediately adjacent, the inner wall face of the tube envelope 12, as for example in a substantially opaque housing 102 that shields it from extraneous light within the tube interior. As the electron beams 16, 18, 20 sweep across the aperture grid 52, the time-varying, periodic current generated through the LED causes it to illuminate in correspondingly time-varying proportion to such current. An optical sensor 104 -- such, for example, as a conventional phototransistor or the like -- mounted closely proximate or adjacent the outer face of the tube envelope wall and positionally aligned with LED 100 detects and outputs a control signal Vₚ substantially proportional to the sensed illumination of the LED. Optical sensor 104, therefore, takes the place of the pick-up coil 70 shown in FIG. 1 and, as with LED 100, may be enclosed within a substantially opaque housing 106 shielding the sensor from ambient light. In this arrangement the wall of the tube envelope 12 is preferably substantially clear or transparent or otherwise appropriately light transmissive in the immediate vicinity of the positionally aligned LED 100 and sensor 104 to provide a generally unimpeded light path for optically coupling the LED and sensor in electrically isolated relation through the envelope wall.

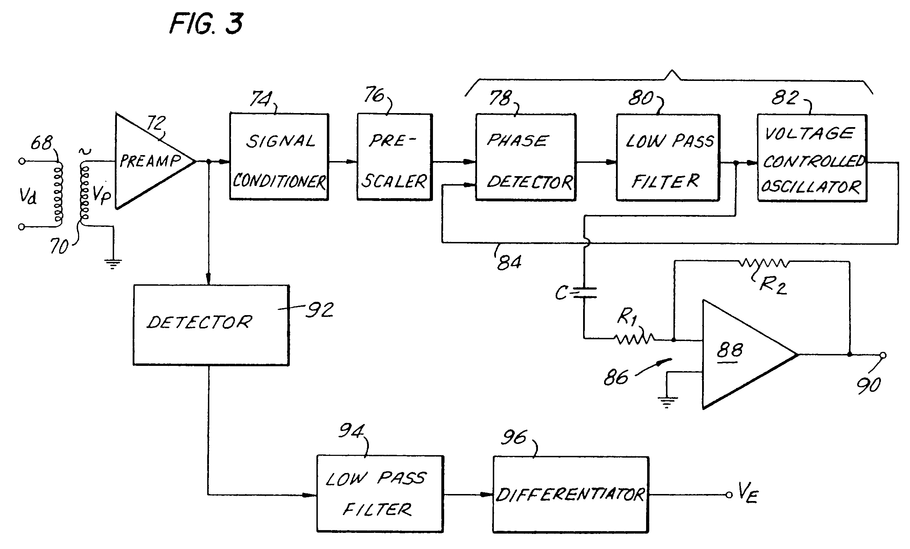

Those skilled in the art will recognize that the use of a light emitting diode to provide the current path between the aperture grid 52 and imaging screen 22 yields an additional benefit not available when the current sensing means is implemented with a one or two-coil arrangement as illustrated in FIG. 1. Derivation or generation of the signals V_{d} across LED 100 and Vₚ across optical sensor 104 does not require continuous movement of the electron beam and, consequently, in an implementation of the invention incorporating the FIG. 3 sensing means the signal V_{d} and Vₚ need not be time-varying or periodic. Thus, in such an arrangement, the focus and/or convergence of the beams, for example, may be adjusted based on the appropriately optimized difference between one of the signals V_{d} or Vₚ when the beams are projecting through an aperture in the screen grid (e.g. Vₚₘᵢₙ) and when the beams are impinging on an adjacent apertures grid wire (Vₚₘₐₓ). Put another way, optimization of the beams and resulting screen image may be effected by positioning the beams at a screen grid aperture and then very slightly deflecting or "nudging" the beams to impinge on an adjacent grid wire. Such modifications are within the intended scope of the present claims.

Still other implementations of the current sensing device are also within the contemplation of the invention. Indeed, it should be understood that such alternate arrangements need not incorporate insulated coupling across the tube envelope of internally-disposed sensor means connecting the aperture grid 52 and imaging screen 22 -- and in which time-varying current I_{d} and/or voltage V_{d} is generated -- with exteriorly-disposed signal pick-up or processing elements or circuitry.

As should now be apparent, as the electron beams 16, 18, 20 are operatively swept across the aperture grid 52 to form an image on imaging screen 22, a time-varying signal directly related to the movement of the beams across the grid 52 is generated in the current sensing means 68 (or 100 in FIG. 2). This signal, and the resulting periodic, time-varying voltage Vₚ induced across pick-up coil 70, is at a maximum as the beams sweep across each grid strip or wire 74 between successive grid apertures 66. Thus, the signal Vₚ is periodic with a frequency proportional to, and which varies with, the linear scanning velocity of the electron beams as they are driven across the screen by the sweep drive or deflection coils 62. In accordance with another aspect of the present invention, a correction signal derived from the signal Vₚ is fed to the sweep deflection coils 62 and, in a closed loop arrangement, is dynamically adjusted to maintain a constant frequency of the signal Vₚ. This adjustment results in substantially constant linear beam sweep velocity across the aperture grid and, therefore, in minimized geometric distortion and correspondingly improved quality of the images produced on the imaging screen 22.

FIG. 3 depicts, by way of example, a block diagram circuit arrangement for utilizing the control signal Vₚ derived from the current sensing means connecting the aperture grid 52 and imaging screen 22 for improving the quality of an image produced on the tube screen in accordance with various aspects of the present invention. It should at the outset be noted, and those skill in the art will recognize in reviewing the present disclosure, that the various individual elements diagramatically illustrated in the block diagram of FIG. 3 are conventional and readily available and, therefore, require neither further description herein nor undue experimentation to enable practice of the present invention. In any event, the time-varying, periodic, sine wave-like signal Vₚ from pick-up coil 70 is initially applied to a preamplifier 72. Preamp 72 buffers the control signal and is effective to reduce the level of noise present in the signal. The signal output from the preamp is, in the FIG. 3 illustrated arrangement, then directed to separate (i.e. upper and lower in the Figure) circuit portions for effecting dynamic adjustment of various CRT operating voltages and elements in accordance with different aspects of the invention -- all, however, relating to the quality of images produced on the tube screen 22. The first or upper portion of FIG. 3 processes the signal Vₚ for use in providing a correction signal for specific application to the horizontal sweep drive circuits and coils 62. Similar correction signals may also be derived from the signal Vₚ and applied to the vertical sweep drive circuits and coils for improving the vertical linearity of images produced on the imaging screen 22.

Referring now to the upper portion of FIG. 3, the output of preamp 72 feeds a conditioning circuit 74 wherein the waveform of the periodic signal is squared to facilitate wave detection and further processing as will hereinafter be described. The frequency of the signal Vₚ, and thus of the squared periodic waveform output from signal conditioner 74, is relatively high -- typically, in color television cathode ray tubes for example, in the range of about 100 to 200 MHz (megahertz). For convenience in subsequent processing of the signal and to enable the ready use of conventional, relatively inexpensive off-the-shelf components and integrated circuits, the signal from conditioner 74 may be prescaled at 76 to lower its frequency to, for example, the range of approximately 1 to 5 MHz (megahertz). Although such prescaling results in a slight loss of operating sensitivity in dynamically correcting horizontal deflection of the electron beams and, therefore, in stabilizing the horizontal linearity of images generated on the screen 22, these losses are relatively minimal and thus well within acceptable limits so as to be virtually unnoticeable to a viewer of the resulting video images. Nevertheless, alternate circuit arrangements may be substituted for the frequency prescaler 76 such, for example, as means for heterodyning of the signal output from conditioner 74 to provide substantially increased sensitivity in the dynamic adjustment of horizontal beam deflection in accordance with the invention.

The output of frequency prescaler 76 is directed to a phase detector 78 which, in conjunction with a following series-connected low pass filter 80 and voltage controlled oscillator (VCO) 82, forms a phase locked loop or frequency discriminator 84. The output of VCO 82 is reapplied to phase detector 78 by return loop 84. As should be apparent, filter 80 outputs a net DC voltage for input to VCO 82, and variations in the frequency of the signal Vₚ and therefore in the signal input to the phase locked loop 84 result in corresponding changes to the voltage applied to the VCO.

The output of low pass filter 80 is applied to a differentiator 86 substantially conventionally formed of an operational amplifier 88, resistor R₂, and a capacitor C and resistor R¹ in series connection between the op amp 88 and filter 80. The series combination of resistor R₁ and capacitor C, as is well understood, sets the upper limit pole (at R₁/C) for the gain of op amp 88. Differentiator 86 outputs, at terminal 90, a control signal or voltage intended for application as a second order correction to the conventional operating circuitry for the horizontal sweep drive coils 62. Thus, differentiator 86 closes the control loop; the phase locked loop 84 stabilizes the frequency of the signal Vₚ by dynamically adjusting the correction signal applied to the horizontal deflection coils 62, thereby operating to maintain a substantially constant horizontal scan rate of the electron beams 16, 18, 20. Thus, in accordance with the invention, an error signal proportional to the beam velocity across the imaging screen is developed and is utilized to enhance the image quality by significantly improving at least the horizontal linearity of images produced on the tube screen 22. Indeed, the present invention provides the ability to realize an unusually high degree of horizontal linearity not heretofore readily attainable since any variations in horizontal beam sweep velocity can be corrected and thereby substantially eliminated. This adjustment may be carried out on a continuous, ongoing basis whenever the tube 10 is in use for generating images on its imaging screen 22.

The second, lower-illustrated portion of the block diagram of FIG. 3 generates a correction signal for specific application to the beam focusing and/or convergence deflection circuitry of the tube 10. The buffered output of preamplifier 72 is applied to a detector 92, implemented for example by a diode rectifier for converting the substantially sinusoidal waveform emerging from pick-up coil 70 and preamp 72 to a time-varying net DC voltage. That DC voltage output is low pass filtered at 94, thus substantially attenuating high frequency noise or ripple present in the preamplified and rectified signal. In the embodiment of FIG. 3, filter 94 is preferably at least a 3 or 4 pole filter having a corner or cut-off frequency at approximately one-fifth the frequency of the control signal Vₚ developed from the current sensor connecting the aperture grid 52 and imaging screen 22. The signal output by low pass filter 94, representing the average amplitude of the control signal waveform Vₚ, is then applied to a differentiator 96. Differentiator 96 generates an error signal Vₑ for application as a second order correction to the conventional focus and/or convergence control circuitry of the tube 10 and associated television receiver or the like, thereby closing the feedback loop by which the voltage differential V_{dmax} - V_{dmin} is dynamically maximized, resulting in corrected focus and/or convergence and correspondingly improved image quality on screen 22.

Use of the focus and/or convergence correcting aspects of the present invention may be effected in a variety of ways. It is currently contemplated that each time the television receiver, or other apparatus incorporating the cathode ray tube 10, is powered up or initialized, the entire imaging screen 22 be mapped to develop, in accordance with the invention, a set of second order correction voltages for application to the focus and/or convergence circuitry, as appropriate, for improving image quality. For example, at initialization each of the beams 16, 18, 20 might first be separately swept across the entirety of the aperture grid to map and store a set of focus correction voltages for application to the control circuitry of electrostatic lens 44 during normal imaging operation of the tube 10. Then, with these focus correction voltages applied to the lens focusing circuitry to provide enhanced beam focus, all of the electron beams 16, 18, 20 may be concurrently swept across the entirety of the aperture grid to map and store a complete set of convergence correction voltages for application, during normal imaging operation of the cathode ray tube, to the control circuitry of the convergence plates 58, 60. If desired or deemed appropriate, one or several such complete raster scans for initializing the focus and convergence correction voltage maps may be performed at tube power-up and, similarly, this process may be carried out for focus alone or for convergence alone as a matter of design choice. The resulting increased accuracy of beam focus and/or convergence, and the corresponding enhancement of image quality on the tube screen 22, provides inherently superior improvements in image quality over current focus and convergence correction arrangements which are typically set once at the time of tube manufacture or initial alignment and do not provide automated regular or continuous adjustments of focus and/or convergence.

It is also contemplated that the mapping of the imaging screen to generate the second-order focus and/or convergence correction voltages be performed on a substantially periodic or at least a repetitive basis -- in addition to at tube power-up -- throughout periods of tube operation. The convergence adjustment, for example, may advantageously be carried out continuously, or at least periodically, all the while that operating power is applied to the tube 10. This continuous adjustment is possible because the process of generating the convergence correction voltages has no deleterious effect on images produced on the imaging screen and is thus transparent to a viewer of the television receiver or other tube-incorporating device. Focus adjustments or updating of the initialized focus correction map, on the other hand, which may most readily be performed by individually sweeping each of the electron beams about the aperture grid, could accordingly be carried out whenever, by way of example, appropriate sensing circuitry detects image generation involving only a single one of the beams, or during sensed program content screen blanking, or during channel changing or other circumstances wherein screen imaging is either not intended or required.

As should by now be apparent, the present invention is grounded on the novel derivation of a time-varying control signal waveform from a sensing means, preferably a current sensing means, connecting the imaging screen of a cathode ray tube and an aperture or screen grid or mask disposed closely proximate the imaging screen, and the development from the derived control signal of a correction signal advantageously capable of use in a wide variety of ways for improving the quality of images generated on the imaging screen. The specific applications to which these control and correction signals may be put in accordance with the invention -- only several of which are, by way of example, expressly described herein -- are obviously many and varied. For example, as heretofore disclosed the time-varying, sine wave-like control signal has a frequency proportional to the swept beam velocity across and about the aperture grid and imaging screen and may therefore be applied to the horizontal and/or vertical deflection coil circuitry to stabilize image linearity and thereby substantially eliminate geometric distortion of images on the tube screen. Also hereinabove described is use of the control signal to correct either or both focus and convergence of the plural electron beams of a color cathode ray imaging tube, thereby substantially improving the definition or clarity and color reproduction and registration accuracy of images produced on the tube screen. Numerous additional applications will suggest themselves to those skilled in the art having knowledge of this disclosure.

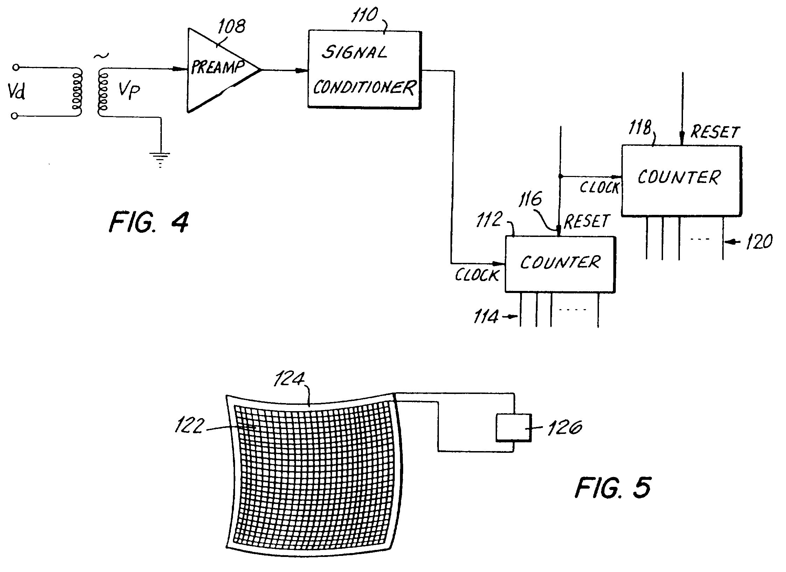

One such further application is depicted in the block diagram of FIG. 4 in which the various illustrated circuit elements are all of conventional and readily available construction. Here again using, for convenience of explanation, the two-coil sensing means arrangement of FIG. 1, the periodic, sine wave-like signal Vₚ is applied to a preamplifier 108 and then to a signal conditioner 110 wherein the waveform is squared for subsequent processing. The resulting square wave is fed to the clock or counting input of a counter circuit 112 which may, for example, provide a binary or binary-coded decimal count at its ouput terminals 114. The counter 112 is reset to zero by applying a pulse to its reset terminal 116 with each horizontal retrace -- i.e. at each vertical indexing or flyback -- of the beams, and of course at tube initialization or power-up. Since the periodic signal Vₚ goes "high" each time the electron beams sweep across an aperture grid wire 64 and goes "low" between successive or adjacent wires as the scanning beams project through each grid aperture to impinge on the tube screen 22, for each horizontal sweep of the electron beams the output of counter 112 will correspond to the number of aperture grid wires crossed by the scanning beams. And because the existing number of aperture grid wires 64 is known for a given cathode ray tube 10, the output of counter 112 directly provides a number indicating the exact current, absolute horizontal position of the beams along the grid 52 and, correspondingly, on the imaging screen 22. Vertical beam position is similarly provided by supplying each flyback or retrace pulse fed to counter reset terminal 116 to the clock input of a second counter 118, the outputs 120 of which yield a number correspondingly indicative of the exact current, absolute vertical beam position on the screen. Counter 118 is reset each time the beams are returned to the top of the screen to initiate a new raster scan.

The ability to immediately and continuously identify with exceptional accuracy the exact position of the scanning electron beams about the imaging screen is of substantial value in enabling further enhancement and improvements in image quality. With this information, correction signals may be developed and applied to the beam focusing and beam convergence circuitry of the tube to accurately compensate for the substantial variations in path length that are inherent in cathode ray imaging tubes as the electron beams are swept horizontally and vertically about the screen. Moreover, the aforementioned map of second-order correction voltages for adjusting the focus and convergence of the scanning beams, as hereabove described, developed at tube power-up and/or on a continual, ongoing basis may be applied or utilized with appreciably improved accuracy by reason of the availability of this additional information as to the exact instantaneous position of the beams. And the beam position information further enables greatly improved image reproduction on the screen since the need to overscan the edges of the imaging screen, as is presently conventionally practiced and by which the peripheral extremes of the image information transmitted from the video signal source are lost to the viewer of the tube screen, is eliminated by the availability of this exceptionally accurate information indicating scanning beam position.

The methods and apparatus of the invention have, as thus far disclosed, been described in association with and in relation to a plural-beam cathode ray tube such as is generally utilized for color imaging. However, in accordance with another aspect of the invention virtually all of the contemplated and herein described methods and apparatus for enhancing and improving the display of images on a plural-beam tube screen may be employed for improving the display of monochrome images on the screen of a single-beam tube. Of course, in order to do so it is necessary to develop a periodic control signal which varies, generally in the manner of a sine wave-like waveform, as the beam is swept across the imaging screen of the tube and, for that purpose, the single-beam cathode ray tube must incorporate a modification such, for example, as that hereinafter described.

In disclosing the various aspects of the invention in conjunction with a plural-beam imaging tube the periodic control signal has been developed by sensing means connecting the beam-selecting aperture grid and the imaging screen of the tube. As is well known, however, the construction of single-beam monochrome imaging tubes primarily differs from that of plural beam color tubes by the omission of any means or apparatus for providing or adjusting the convergence of multiple beams. As a consequence, such monochrome tubes lack an aperture grid or the like disposed in close proximity to the imaging screen. In accordance with the present invention, therefore, an otherwise generally conventional single-beam cathode ray tube (not shown) is modified by locating a sensing grid, such as that identified by the reference numeral 122 in FIG. 5, in close proximity to the otherwise conventional imaging screen 124.

In a currently preferred construction, the sensing grid 122 is laid or deposited or otherwise disposed in directly supported relation on that surface of the imaging screen on which the electron beam impinges to generate viewable images. Conventional monochrome screens are typically formed by depositing a layer of imaging phosphor on the interior tube target surface and a metallized conductive layer, as of aluminum, atop the phosphor. In accordance with an embodiment of the present invention, the sensing grid 122 is defined by selectively depositing, on the aluminized target screen 124, a substantially transparent insulating material and, atop that, a substantially transparent conductive material, both these additional deposits taking the form of a closely spaced, reticulated network of relatively thin, substantially parallel vertically-aligned and substantially parallel horizontally-aligned lines defining a conductive grid separated from the aluminized imaging target by the insulating material. The sensing grid 122 thereby formed thus comprises a series of relatively and selectively closely spaced grid strips or wires bounding plural apertures through which the swept electron beam operatively passes to generate an image on the screen 124. The deposited insulating material may, for example, comprise silicon dioxide, and the deposited conductive material, for example, may be aluminum of a width appropriate for avoiding image-degrading interference with the electron beam as it impinges on the imaging screen and which is, therefore, effectively transparent. The insulating and conductive materials disposed supportedly atop the conventional imaging screen may be selectively deposited in the final intended configuration, or deposited over a greater-than-necessary area of the screen and then selectively reconfigured as by etching or photolithography or any appropriate method or means.

With the single beam monochrome imaging tube thus modified to incorporate a sensing grid 122 in closely spaced but electrically insulated relation to the imaging screen 124, a sensing device 126, preferably a current sensing device, is connected between the sensing grid and imaging screen as has been previously described in connection with the color CRT embodiments of the invention. The imaging screen is, of course, connected to a high potential such as the anode voltage of the tube to provide the intended current flow through sensing device 126 as the beam is operatively swept across the screen. As should be apparent, the sensing device may for example take the form of the electromagnetically-coupled coils 68, 70 of FIG. 1, or of the optically-coupled LED and optical sensor 100, 104 of FIG. 2, or any other approriate arrangement in accordance with the invention.

The time-varying periodic signal operatively developed by sensing device 126 may be incorporated in any or all of the ways heretofore described in conjunction with the plural-beam color imaging tube 10 -- with the obvious exception of adjusting convergence of multiple electron beams -- for improving the quality of images produced on the tube screen 124. Thus, beam focus may be adjusted at power-up and/or periodically or continuously during imaging operation of the tube. Horizontal and/or vertical linearity may be adjusted by stabilizing the beam sweep velocity to eliminate geometric distortion of images produced on the screen. Absolute beam position on the imaging screen may be obtained for a variety of uses in enhancing image reproduction and quality by appropriately applying the control signal from the sensing device 126 to a counter such, for example, as is illustrated in FIG. 4. These and other applications for utilizing the control signal derived from the current sensor connecting the sensing grid and imaging screen for improving image quality are within the scope and contemplation of the invention.

While there have been shown and described and pointed out fundamental novel features of the invention as applied to preferred embodiments thereof, it will be understood that various omissions and substitutions and changes in the form and details of the devices illustrated and in their operation, and in the methods of the invention, may be made by those skilled in the art without departing from the scope of the claims. It is the intention, therefore, to be limited only as indicated by the scope of the claims appended hereto.

## Claims

1. Apparatus for creating an image of enhanced quality on an imaging screen of a cathode ray tube, comprising:
1. a cathode ray tube (10) comprising:
a. means (24, 26, 28) for generating an electron beam (16, 18, 20);
b. an imaging screen (22) spaced from said beam generating means;
c. deflecting means for directing said electron beam from said beam generating means through substantially continuous scanning movement in a given sweep direction across said imaging screen (22) to produce an image on said imaging screen;
d. a screen grid (52) having a plurality of apertures (66) spaced across the screen grid in said sweep direction of the electron beam, said screen grid being disposed within the path of said electron beam closely proximate said imaging screen (22) so that as the electron beam scans in said sweep direction it successively passes through said apertures (66) to impinge and thereby create an image on said imaging screen (22), and the beam is at least partly intercepted by said screen grid (52) and thereby at least partly prevented from impinging on said imaging screen (22) as said beam scans in said sweep direction across screen grid locations intermediate successive apertures (66); and
e. means operable for controlling a characteristic affecting the quality of an image produced on said imaging screen (22) by said electron beam, comprising said deflecting means and lens means (48) for focusing said electron beam on said imaging screen;
2. means connecting said screen grid (52) and imaging screen (22) for deriving a time-varying signal (V_{d}) produced as said electron beam continuously scans in said sweep direction across said screen grid (52) and varying between a minimum amplitude when the scanning beam successively passes through each said aperture (66) and a maximum amplitude as the scanning beam is at least partly intercepted by said screen grid (52) intermediate successive apertures whereby a time-varying current flow between said screen grid (52) and imaging screen (22) is established through said connecting means as the beam scans in said sweep direction along the screen grid across transitions (64) between successive apertures (66) in said sweep direction; and
3. means for generating from said time-varying signal (V_{d}) a control signal (Vₚ) and for applying said control signal to at least one of said image characteristic controlling means of the cathode ray tube (10) for improving the operation of said at least one controlling means and thereby enhancing the quality of an image produced by said scanning electron beam on said imaging screen (22).

2. Apparatus in accordance with claim 1, wherein said control signal (Vₚ) is dynamically adjusted by said control signal generating means in response to said time-varying signal (V_{d}) to minimize said minimum amplitude and thereby to minimize impingement of said electron beam on the screen grid (52) as said scanning beam passes through each said screen grid aperture (66).

3. Apparatus in accordance with claim 1 or 2, said connecting means comprising coil means (68) disposed within the interior of said cathode ray tube (10) and connecting said screen grid (52) and imaging screen (22) for providing a current path between said screen grid and imaging screen and further comprising signal pick-up means disposed exterior of said cathode ray tube (10) and in sufficient proximity to said coil means (68) so that said time-varying signal (V_{d}) is electromagnetically coupled from said coil means (68) to said pick-up means.

4. Apparatus in accordance with claim 3, wherein said signal pick-up means comprises a pick-up coil (70).

5. Apparatus in accordance with claim 1 or 2, said connecting means comprising light emitting diode means (100) disposed within the interior of said cathode ray tube (10) and connecting said screen grid (52) and imaging screen (22) for providing a current path between said screen grid and imaging screen and being operably illuminated by and in substantial proportion to electric current flowing therethrough between said screen grid and imaging screen, and further comprising optical sensing means (104) disposed exterior of said cathode ray tube (10) and in optical communication with said diode means (100) for generating said control signal (Vₚ) in response and in substantial proportion to said illumination of said diode means (100).

6. Apparatus in accordance with anyone of the preceding claims, further comprising processing means for generating from said time-varying signal (V_{d}) an output signal related to the then current position of the scanning electron beam on said imaging screen (22).

7. Apparatus in accordance with claim 6, wherein said processing means comprises counter means (112, 118) for generating a count incremented by each said variation of said time-varying signal (V_{d}) from said minimum to said maximum amplitude thereof.

8. Apparatus in accordance with anyone of the preceding claims, wherein said time-varying signal (V_{d}) is periodic, said control signal generating means comprising means for adjusting the control signal (Vₚ) to stabilize the frequency of said time-varying signal (V_{d}) and for applying said control signal (Vₚ) to said deflecting means to maintain a constant linear beam scanning velocity and thereby substantially eliminate linearity-related geometric distortion of images created on the imaging screen (22).

9. Apparatus in accordance with anyone of the preceeding claims, wherein said electron beam generating means comprises means (24, 26, 28) for generating a plurality of electron beams (16, 18, 20), and said controlling means of the cathode ray tube (10) further comprises means (50) for selectively deflecting said plural electron beams to cause said beams to converge at said screen grid (22).

10. Apparatus in accordance with anyone of the preceding claims, the screen grid (52) having a plurality of apertures (66) elongated in a first direction, and comprising
a. first deflecting means for directing said electron beams through substantially continuous scanning movement across said screen grid (52) in a second direction transverse to said first direction so that the scanning beams successively pass through said apertures (66) to impinge and thereby create an image on said imaging screen (22), and the beams are at least partly intercepted by the screen grid (52) and thereby at least partly prevented from impinging on the imaging screen (22) as the beams scan in said second direction across screen grid locations intermediate successive apertures;
b. second deflecting means (50) for causing said plural scanning electron beams (16, 18, 20) to converge at said screen grid (52); and
c. lens means (46, 48) for focusing the electron beam on said imaging screen (22).

11. Apparatus in accordance with claim 10, wherein said first direction of screen grid apertures elongation and said second direction of substantially continuous scanning movement of said electron beams are substantially perpendicular.

12. Apparatus in accordance with anyone of the preceding claims, further comprising insulating means disposed on the imaging screen (22), and said screen grid (52) being mounted on said insulating means so that the screen grid is physically and electrically separated from the imaging screen (22) by said insulating means.

13. Apparatus in accordance with claim 12, wherein said insulating means comprises a substantially transparent insulating material deposited on a face of the imaging screen (22).

14. Apparatus in accordance with claim 13, wherein said insulating material is silicon dioxide.

15. Apparatus in accordance with anyone of claims 12 to 14, wherein said screen grid (52) comprises a grid formed of a conductive material deposited on said insulating material.

16. Apparatus in accordance with claim 15, wherein said conductive material is aluminium.

17. Apparatus in accordance with anyone of claims 12 to 16, wherein said screen grid (52) comprises a grid formed of a substantially transparent conductive material deposited on said insulating material.

18. Use of an apparatus in accordance with anyone of the claims 1 to 17, where the time-varying signal (V_{d}) is used to improve the clarity of the image produced on the imaging screen (22).

19. Use of an apparatus in accordance with anyone of the claims 1 to 17, where the time-varying signal (V_{d}) is used to correct misfocussing of the electron beam and therefore of an image produced on the imaging screen (22).

20. Use of an apparatus in accordance with anyone of the claims 1 to 17, where the time-varying signal (V_{d}) is used to improve the accuracy of convergence of a plurality of beams (16, 18, 20) at said screen grid (52) and thereby enhancing the quality of the image produced on the imagine screen (22).

21. Method for correcting misconvergence of a plurality of substantially continuously moving scanning electron beams at a screen grid having a plurality of elongated apertures elongated in a first direction, the screen grid being disposed substantially adjacent the imaging screen of a cathode ray tube having deflection means operable for directing the paths of the electron beams toward the screen grid for substantially continuous scanning movement of the electron beams across the screen grid in a second direction transverse to said first direction, comprising the steps of:
connecting the screen grid to the imaging screen by current sensing means to provide a time-varying signal (V_{d}) which varies, as the electron beams scan in said second direction across the screen grid and thus successively through the apertures therein to impinge on the imaging screen for creating an image on the imaging screen, between a first voltage as the beams scan across each said aperture in the screen grid and a second voltage as the beams scan across the screen grid in said second direction between successive apertures;
generating from said time-varying signal (V_{d}) a control signal (Vₚ) from which a correction signal is derived for application to the deflection means to adjust the path of at least one of the electron beams and thereby adjust convergence of the electron beams at the screen grid; whereby
said correction signal is generated by dynamically maximizing the difference between said first and second voltages whereby the plural electron beams are caused to accurately converge at the screen grid.

22. Method according to claim 21, wherein said first direction of screen grid apertures elongation and said second direction of substantially continuous scanning movement of the electron beams are substantially perpendicular.

## Patentansprüche

1. Vorrichtung zur Erzeugung eines Bildes verbesserter Qualität auf einem Bildschirm einer Kathodenstrahlröhre, umfassend:
1. eine Kathodenstrahlröhre (10) mit
a) Mitteln (24, 26, 28) zur Erzeugung eines Elektronenstrahls (16, 18, 20),
b) einem Bildschirm (22), der zu den Strahlerzeugungsmitteln einen Abstand aufweist,
c) Ablenkmitteln, die den Elektronenstrahl von den Strahlerzeugungsmitteln durch eine im wesentlichen kontinuierliche Abtastbewegung in einer vorgegebenen Durchlaufrichtung über den Bildschirm (22) leiten, um auf diesem das Bild zu erzeugen,
d) einem Schirmgitter (52) mit einer Vielzahl von Öffnungen (66), die über das Schirmgitter in der Durchlaufrichtung des Elektronenstrahls verteilt sind, wobei das Schirmgitter in der Durchlaufbahn des Elektronenstrahls so nahe vor dem Bildschirm (22) angeordnet ist, daß der Elektronenstrahl bei seiner Abtastbewegung in der Durchlaufrichtung anschließend durch die Öffnungen (66) hindurchtritt, um auf den Bildschirm (22) aufzutreffen und auf diesem ein Bild zu erzeugen, wobei der Strahl wenigstens teilweise von dem Schirmgitter (52) aufgefangen und damit wenigstens teilweise gehindert wird, auf den Bilschirm (22) aufzutreffen, wenn der Strahl in der Durchlaufrichtung über Schirmgitterstellen läuft, die zwischen aufeinanderfolgenden Öffnungen (66) liegen, und
e) Mitteln zum Einstellen einer Charakteristik, die die Qualität eines Bildes beeinflußt, das auf dem Bildschirm (22) durch den Elektronenstrahl erzeugt wird, umfassend die Ablenkmittel sowie eine Linseneinrichtung (48), die den Elektronenstrahl auf dem Bildschirm fokussiert,
2. Mittel für die Verbindung des Schirmgitters (52) mit dem Bildschirm (22) zur Ableitung eines zeitveränderlichen Signals (Vd), das erzeugt wird, wenn der Elektronenstrahl kontinuierlich in der Durchlaufrichtung über das Schirmgitter (52) läuft, und das sich zwischen einer minimalen Amplitude beim sukzessivem Durchtritt durch die Öffnungen (66) und einer maximalen Amplitude ändert, bei der der Abtaststrahl wenigstens teilweise zwischen den nebeneinanderliegenden Öffnungen unterbrochen wird, wodurch ein zeitveränderlicher Stromfluß zwischen dem Schirmgitter (52) und dem Bildschirm (22) über die Verbindungsmittel erzeugt wird, wenn der Strahl in der Durchlaufrichtung an dem Schirmgitter über die Übergänge (64) zwischen aufeinanderfolgenden Öffnungen (66) in der Durchlaufrichtung streicht, und
3. Mittel, die aus dem zeitveränderlichen Signal (Vd) ein Steuersignal (Vp) erzeugen und dieses zu wenigstens einem der Mittel zum Einstellen der Charakteristik der Kathodenstrahlröhre (10) leiten, um die Funktion des Einstellmittels zu verbessern und damit die Qualität eines Bildes zu erhöhen, welches durch dem Abtastelektronenstrahl auf dem Bildschirm (22) erzeugt wird.

2. Vorrichtung nach Anspruch 1, dadurch gekennzeichnet, daß das Steuersignal (Vp) durch die Mittel zum Erzeugen des Steuersignals in Abhängigkeit von dem zeitveränderlichen Signal (Vd) dynamisch angepaßt wird, um die minimale Amplitude zu minimieren und dadurch das Auftreffen des Elektronenstrahls auf das Schirmgitter (52) zu minimieren, wenn der Elektronenstrahl durch jede der Öffnungen (66) des Schirmgitters läuft.

3. Vorrichtung nach Anspruch 1 oder 2, dadurch gekennzeichnet, daß die Verbindungsmittel eine Spulenanordnung (68) aufweisen, die im Inneren der Kathodenstrahlröhre (10) angeordnet ist und das Schirmgitter (52) mit dem Bildschirm (22) verbindet, wodurch ein Strompfad zwischen dem Schirmgitter und dem Bildschirm hergestellt wird, und daß die Verbindungsmittel ferner eine Signalaufnahmeeinrichtung haben, die außerhalb der Kathodenstrahlröhre (10) so ausreichend nahe an der Spulenanordnung (68) angeordnet ist, daß das zeitveränderliche Signal (Vd) von der Spulenanordnung (68) elektromagnetisch mit der Signalaufnahmeeinrichtung gekoppelt wird.

4. Vorrichtung nach Anspruch 3, dadurch gekennzeichnet, daß die Signalaufnahmeeinrichtung eine Sondenspule (70) aufweist.

5. Vorrichtung nach Anspruch 1 oder 2, dadurch gekennzeichnet, daß die Verbindungsmittel eine LED-Einrichtung (100) aufweisen, die innerhalb der Kathodenstrahlröhre (10) angeordnet ist und das Schirmgitter (52) mit dem Bildschirm (22) zur Erzeugung eines Strompfades zwischen dem Schirmgitter und dem Bildschirm verbindet, wobei die LED-Einrichtung im Betrieb von dem elektrischen, durch diese zwischen dem Schirmgitter und dem Bildschirm hindurchfließenden Strom im wesentlichen proportional zu diesem zum Leuchten gebracht wird, und daß die Verbindungsmittel ferner optische Sensormittel (104) aufweisen, die außerhalb der Kathodenstrahlröhre (10) in optischer Verbindung mit der LED-Einrichtung (100) angeordnet sind, um das Steuersignal (Vp) in Funktion und im wesentlichen proportional zu der Leuchtwirkung der LED-Einrichtung (100) zu erzeugen.

6. Vorrichtung nach einem der vorhergehenden Ansprüche, dadurch gekennzeichnet, daß Prozessormittel vorgesehen sind, die aus dem zeitveränderlichen Signal (Vd) ein Ausgangssignal erzeugen, das mit der augenblicklichen Position des Abtastelektronenstrahl auf dem Bildschirm (22) verknüpft ist.

7. Vorrichtung nach Anspruch 6, dadurch gekennzeichnet, daß die Prozessormittel eine Zähleinrichtung (112, 118) aufweisen, die bei jeder Veränderung des zeitveränderlichen Signals (Vd) zwischen der minimalen und der maximalen Amplitude einen Zählschritt erzeugen.

8. Vorrichtung nach einem der vorhergehenden Ansprüche, dadurch gekennzeichnet, daß das zeitveränderliche Signal (Vd) periodisch ist und daß die Mittel zur Erzeugung des Steuersignals eine Einrichtung zur Einstellung des Steuersignals (Vp) aufweisen, wodurch die Frequenz des zeitveränderlichen Signals (Vd) stabilisiert und das Steuersignal (Vp) an die Ablenkmittel geleitet wird, um eine konstante lineare Strahlabtastgeschwindigkeit aufrechzuerhalten und dadurch im wesentlichen geometrische Linearitäts-Verzerrungen der auf dem Bildschirm (22) erzeugten Bilder zu eliminieren.

9. Vorrichtung nach einem der vorhergehenden Ansprüche, dadurch gekennzeichnet, daß die Einrichtung zur Erzeugung des Elektronenstrahls Mittel (24, 26, 28) zur Erzeugung einer Vielzahl von Elektronenstrahlen (16, 18, 20) aufweist und daß die Mittel zur Einstellung der Kathodenstrahlröhre (10) ferner eine Einrichtung (50) zur selektiven Ablenkung der Elektronenstrahlen aufweisen, so daß diese Strahlen an dem Schirmgitter (52) konvergieren.

10. Vorrichtung nach einem der vorhergehenden Ansprüche, bei der das Schirmgitter (52) eine Vielzahl von Öffnungen (66) aufweist, die in einer ersten Richtung eine längliche Form haben, umfassend
a) erste Ablenkmittel zur Ablenkung der Elektronenstrahlen durch eine im wesentlichen kontinuierliche Abtastbewegung durch das Schirmgitter (52) in einer zweiten Richtung, die quer zu der ersten Richtung verläuft, so daß die Abtaststrahlen nacheinander durch die Öffnungen (66) hindurchtreten und auf dem Bildschirm (22) auftreffen, wo sie ein Bild erzeugen, wobei die Strahlen wenigstens teilweise durch das Schirmgitter (52) aufgefangen und damit wenigstens teilweise an einem Auftreffen auf dem Bildschirm (22) gehindert werden, wenn sie in der zweiten Richtung über Schirmgitterstellen zwischen nebeneinanderliegenden Öffnungen laufen,
b) zweite Ablenkmittel (50), über die die Vielzahl der Elektronenstrahlen (16, 18, 20) am Schirmgitter (52) konvergieren, und
c) eine Linseneinrichtung (46, 48) zum Fokussieren des Elektronenstrahls auf dem Bildschirm (22).

11. Vorrichtung nach Anspruch 10, dadurch gekennzeichnet, daß die erste Richtung, in der die länglichen Schirmgitteröffnungen liegen, und die zweite Richtung der im wesentlichen kontinuierlichen Abtastbewegung der Elektronenstrahlen im wesentlichen rechtwinklig zueinander verlaufen.

12. Vorrichtung nach einem der vorhergehenden Ansprüche, gekennzeichnet durch Isoliermittel, die auf dem Bildschirm (22) angeordnet sind, wobei das Schirmgitter (52) so auf den Isoliermitteln angebracht ist, daß es durch diese physisch und elektrisch von dem Bildschirm (22) getrennt wird.

13. Vorrichtung nach Anspruch 12, dadurch gekennzeichnet, daß die Isoliermittel im wesentlichen aus einem transparenten Isoliermaterial bestehen, das auf einer Seite des Bildschirms (22) abgelagert ist.

14. Vorrichtung nach Anspruch 13, dadurch gekennzeichnet, daß das Isoliermaterial aus Siliziumdioxid besteht.

15. Vorrichtung nach einem der Ansprüche 12 bis 14, dadurch gekennzeichnet, daß das Schirmgitter (52) ein Gitter ist, welches aus leitendem Material besteht, das auf dem Isoliermaterial abgelagert ist.

16. Vorrichtung nach Anspruch 15, dadurch gekennzeichnet, daß das leitende Material Aluminium ist.

17. Vorrichtung nach einem der Ansprüche 12 bis 16, dadurch gekennzeichnet, daß das Schirmgitter (52) ein Gitter ist, das aus einem im wesentlichen transparenten, leitenden Material hergestellt ist, welches auf dem isolierenden Material abgelagert ist.

18. Verwendung einer Vorrichtung nach einem der Ansprüche 1 bis 17, bei der das zeitveränderliche Signal (Vd) eingesetzt wird, um die Klarheit des auf dem Bildschirm (22) erzeugten Bildes zu verbessern.

19. Verwendung einer Vorrichtung nach einem der Ansprüche 1 bis 17, bei der das zeitveränderliche Signal (Vd) genutzt wird, um eine Fehlfokussierung des Elektronenstrahls und damit des auf dem Bildschirm (22) erzeugten Bildes zu korrigieren.

20. Verwendung einer Vorrichtung nach einem der Ansprüche 1 bis 17, bei der das zeitveränderliche Signal (Vd) genutzt wird, um die Genauigkeit der Konvergenz der Vielzahl der Strahlen (16, 18, 20) am Schirmgitter (52) und damit die Qualität des auf dem Bildschirm (22) erzeugten Bildes zu verbessern.

21. Verfahren zur Korrektur der Mißkonvergenz einer Mehrzahl von im wesentlichen kontinuierlich bewegten, elektronischen Abtaststrahlen an einem Schirmgitter, das in einer ersten Richtung eine Vielzahl länglicher Öffnungen hat und im wesentlichen angrenzend an den Bildschirm einer Kathodenstrahlröhre angeordnet ist, die Ablenkmittel zur Ausrichtung der Elektronenstrahlpfade in Richtung auf das Schirmgitter für eine im wesentliche kontinuierliche Abtastbewegung der Elektronenstrahlen auf dem Schirmgitter in einer zweiten Richtung hat, die quer zu der ersten Richtung verläuft, umfassend die folgenden Schritte:
Verbinden des Schirmgitters mit dem Bildschirm über Stromsensormittel zur Erzeugung eines zeitveränderlichen Signals (Vd), das sich ändert, wenn die Elektronenstrahlen in der zweiten Richtung über das Schirmgitter laufen und dabei nacheinander durch die Öffnungen hindurchtreten, um auf den Bildschirm aufzutreffen und dort ein Bild zu erzeugen, wobei das zeitveränderliche Signal zwischen einer ersten Spannung, bei der die Strahlen durch die Öffnungen in dem Schirmgitter hindurchtreten, und einer zweiten Spannung variiert, bei der die Strahlen über das Schirmgitter in der zweiten Richtung zwischen jeweils aufeinander folgenden Öffnungen laufen,
Erzeugen eines Steuersignals (Vp) aus dem zeitveränderlichen Signal (Vd), aus welchem Steuersignal ein Korrektursignal abgeleitet wird, das an die Ablenkmittel weitergeleitet wird, um den Pfad wenigstens eines der Elektronenstrahlen einzustellen und damit die Konvergenz der Elektronenstrahlen am Schirmgitter einzuregelen,
wobei das Korrektursignal erzeugt wird durch dynamische Maximierung der Differenz zwischen der ersten und der zweiten Spannung, wodurch die Elektronenstrahlen akkurat an dem Schirmgitter konvergieren.

22. Verfahren nach Anspruch 21, dadurch gekennzeichnet, daß die erste Richtung der länglichen Schirmgitteröffnungen und die zweite Richtung der im wesentlichen kontinuierlichen Abtastbewegung der Elektronenstrahlen im wesentlichen rechtwinklig zueinander verlaufen.

## Revendications

1. Appareil pour créer une image de qualité améliorée sur l'écran de génération d'images d'un tube cathodique, comprenant :
1. un tube cathodique (10) comprenant :
a. des moyens (24, 26, 28) pour générer un faisceau d'électrons (16, 18, 20) ;
b. un écran de génération d'images (22) écarté desdits moyens de génération de faisceau ;
c. des moyens de déflexion pour diriger ledit faisceau d'électrons provenant desdits moyens de génération de faisceau selon un mouvement de balayage sensiblement continu dans une direction de balayage donnée au travers dudit écran de génération d'images (22) pour produire une image sur ledit écran de génération d'images ;
d. une grille d'écran (52) ayant une pluralité d'ouvertures (66) espacées en travers de la grille d'écran dans ladite direction de balayage du faisceau d'électrons, ladite grille d'écran étant disposée sur le chemin dudit faisceau d'électrons à proximité immédiate dudit écran de génération d'images (22) de telle sorte que lorsque le faisceau d'électrons se déplace dans ladite direction de balayage il passe successivement à travers lesdites ouvertures (66) pour frapper et créer ainsi une image sur ledit écran de génération d'images (22), et le faisceau est au moins partiellement intercepté par ladite grille d'écran (52) et est ainsi au moins partiellement empêché de frapper sur ledit écran de génération d'images (22) pendant que ledit faisceau se déplace par balayage dans ladite direction de balayage au travers des zones de grille d'écran qui séparent des ouvertures successives (66) ; et
e. des moyens actionnables pour commander une caractéristique affectant la qualité d'une image produite sur ledit écran de génération d'images (22) par ledit faisceau d'électrons, comprenant ledit moyen de déflexion et un moyen de lentille (48) pour focaliser ledit faisceau d'électrons sur ledit écran de génération d'images ;
2. des moyens pour connecter ladite grille d'écran (52) et ledit écran de génération d'images (22) pour dériver un signal (V_{d}) variant avec le temps produit lorsque ledit faisceau d'électrons se déplace de façon continue dans ladite direction de balayage au travers de ladite grille d'écran (52) et variant entre une amplitude minimum lorsque le faisceau qui se déplace passe successivement à travers chacune desdites ouvertures (66) et une amplitude maximum lorsque le faisceau qui se déplace est au moins partiellement intercepté par ladite grille d'écran (52) entre des ouvertures successives de sorte qu'un courant qui varie avec le temps entre ladite grille d'écran (52) et l'écran de génération d'images (22) est établi dans lesdits moyens de connexion lorsque le faisceau se déplace dans ladite direction de balayage le long de la grille d'écran au travers de transitions (64) entre les ouvertures successives (66) dans ladite direction de balayage ; et
3. des moyens pour générer à partir dudit signal (V_{d}) qui varie avec le temps un signal de commande (Vₚ) et pour appliquer ledit signal de commande à au moins l'un des moyens de commande de caractéristiques d'image du tube cathodique (10) pour améliorer le fonctionnement dudit au moins un moyen de commande et pour améliorer ainsi la qualité d'une image produite par ledit faisceau d'électrons qui se déplace sur ledit écran de génération d'images (22).

2. Appareil selon la revendication 1, dans lequel ledit signal de commande (Vₚ) est ajusté de façon dynamique par lesdits moyens de génération de signal de commande en réponse audit signal (V_{d}) variant dans le temps pour minimiser ladite amplitude minimum et ainsi minimiser l'impact dudit faisceau d'électrons sur la grille d'écran (52) lorsque ledit faisceau qui se déplace traverse chacune desdites ouvertures (66) de grille d'écran.

3. Appareil selon les revendications 1 ou 2, lesdits moyens de connexion comprenant un moyen de bobine (68) disposé à l'intérieur du tube cathodique (10) et connectant ladite grille d'écran (52) et l'écran de génération d'images (22) pour créer un chemin de courant entre ladite grille d'écran et l'écran de génération d'images et comprenant en outre un moyen de capteur de signal disposé à l'extérieur du tube cathodique (10) et à proximité suffisante dudit moyen de bobine (68) de façon que le signal (V_{d}) qui varie avec le temps soit couplé électromagnétiquement entre ledit moyen de bobine (68) et ledit moyen de capteur.

4. Appareil selon la revendication 3, dans lequel ledit moyen de capteur de signal comprend une bobine de capteur (70).

5. Appareil selon les revendications 1 ou 2, lesdits moyens de connexion comprenant un moyen de diode émettrice de lumière (100) disposé à l'intérieur du tube cathodique (10) et connectant ladite grille d'écran (52) et l'écran de génération d'images (22) pour réaliser un chemin de courant entre ladite grille d'écran et l'écran de génération d'images et étant fonctionnellement éclairé par et sensiblement en proportion du courant qui le traverse entre ladite grille d'écran et l'écran de génération d'images, et comprenant en outre un moyen de capteur optique (104) disposé à l'extérieur dudit tube cathodique (10) et en communication optique avec ledit moyen de diode (100) pour générer ledit signal de commande (Vₚ) en réponse et sensiblement en proportion dudit éclairement dudit moyen de diode (100).

6. Appareil selon l'une quelconque des revendications précédentes, comprenant en outre un moyen de traitement pour générer à partir dudit signal (V_{d}) variant avec le temps un signal de sortie correspondant à la position courante du faisceau d'électrons qui se déplace sur ledit écran de génération d'images (22).

7. Appareil selon la revendication 6, dans lequel ledit moyen de traitement comprend des moyens de compteur (112, 118) pour générer un comptage incrémenté par chacune desdites variations dudit signal (V_{d}) variant avec le temps depuis son amplitude minimum jusqu'à son amplitude maximum.

8. Appareil selon l'une quelconque des revendications précédentes, dans lequel ledit signal (V_{d}) qui varie avec le temps est périodique, lesdits moyens de génération de signal de commande comprenant un moyen pour ajuster le signal de commande (Vₚ) pour stabiliser la fréquence dudit signal (V_{d}) variant avec le temps et pour appliquer ledit signal de commande (Vₚ) audit moyen de déflexion pour maintenir constante la vitesse linéaire de balayage de faisceau et éliminer ainsi sensiblement la distorsion géométrique liée à la linéarité dans les images créées sur l'écran de génération d'images (22).

9. Appareil selon l'une quelconque des revendications précédentes, dans lequel lesdits moyens de génération de faisceau d'électrons comprennent des moyens (24, 26, 28) pour générer une pluralité de faisceaux d'électrons (16, 18, 20), et lesdits moyens de commande du tube cathodique (10) comprennent en outre des moyens (50) pour dévier sélectivement ladite pluralité de faisceaux d'électrons pour faire converger lesdits faisceaux sur ladite grille d'écran (22).

10. Appareil selon l'une quelconque des revendications précédentes, ladite grille d'écran (52) ayant une pluralité d'ouvertures (66) réparties dans une première direction, et comprenant :
a. un premier moyen de déflexion pour dévier lesdits faisceaux d'électrons selon un mouvement de balayage sensiblement continu au travers de ladite grille d'écran (52) dans une seconde direction transversale par rapport à ladite première direction de telle sorte que les faisceaux qui se déplacent traversent successivement lesdites ouvertures (66) pour frapper et ainsi créer une image sur ledit écran de génération d'images (22), et les faisceaux sont au moins partiellement interceptés par la grille d'écran (52) et sont ainsi au moins partiellement empêchés de frapper l'écran de génération d'images (22) lorsque les faisceaux se déplacent dans ladite seconde direction au travers de zones de grille d'écran situées entre des ouvertures successives ;
b. des seconds moyens de déflexion (50) pour faire converger ladite pluralité de faisceaux d'électrons qui se déplacent (16, 18, 20) sur ladite grille d'écran (52) ; et
c. des moyens de lentilles (46, 48) pour focaliser le faisceau d'électrons sur ledit écran de génération d'images (22).

11. Appareil selon la revendication 10, dans lequel ladite première direction de répartition d'ouvertures de grille d'écran et ladite seconde direction de mouvement de balayage sensiblement continu desdits faisceaux d'électrons sont sensiblement perpendiculaires.

12. Appareil selon l'une quelconque des revendications précédentes, comprenant en outre un moyen isolant disposé sur l'écran de génération d'images (22), et ladite grille d'écran (52) étant montée sur ledit moyen isolant de telle sorte que la grille d'écran est physiquement et électriquement séparée de l'écran de génération d'images (22) par ledit moyen isolant.

13. Appareil selon la revendication 12, dans lequel ledit moyen isolant comprend un matériau isolant sensiblement transparent déposé sur une face de l'écran de génération d'images (22).

14. Appareil selon la revendication 13, dans lequel ledit matériau isolant est le dioxyde de silicium.

15. Appareil selon l'une quelconque des revendications 12 à 14, dans lequel ladite grille d'écran (52) comprend une grille formée d'un matériau conducteur déposé sur ledit matériau isolant.

16. Appareil selon la revendication 15, dans lequel ledit matériau conducteur est l'aluminium.

17. Appareil selon l'une quelconque des revendications 12 à 16, dans lequel ladite grille d'écran (52) comprend une grille formée d'un matériau conducteur sensiblement transparent déposé sur ledit matériau isolant.

18. Utilisation d'un appareil selon l'une quelconque des revendications 1 à 17, dans laquelle le signal (V_{d}) variant avec le temps est utilisé pour améliorer la netteté de l'image produite sur l'écran de génération d'images (22).

19. Utilisation d'un appareil selon l'une quelconque des revendications 1 à 17, dans laquelle le signal (V_{d}) variant avec le temps est utilisé pour corriger le défaut de focalisation du faisceau d'électrons et ainsi d'une image produite sur l'écran de génération d'images (22).

20. Utilisation d'un appareil selon l'une quelconque des revendications 1 à 17, dans laquelle le signal (V_{d}) variant avec le temps est utilisé pour améliorer la précision de convergence d'une pluralité de faisceaux (16, 18, 20) selon la grille d'écran (52) et pour augmenter ainsi la qualité de l'image produite sur l'écran de génération d'images (22).

21. Procédé pour corriger le défaut de convergence d'une pluralité de faisceaux d'électrons se déplaçant par balayage de façon sensiblement continue sur une grille d'écran ayant une pluralité d'ouvertures réparties dans une première direction, la grille d'écran étant disposée sensiblement adjacente à l'écran de génération d'images d'un tube cathodique ayant des moyens de déflexion actionnables pour diriger les chemins des faisceaux d'électrons vers la grille d'écran pour un mouvement de balayage sensiblement continu des faisceaux d'électrons au travers de la grille d'écran dans une seconde direction transversale par rapport à ladite première direction, comprenant les étapes de :
connecter la grille d'écran à l'écran de génération d'images par un moyen de capteur de courant pour produire un signal (V_{d}) variant avec le temps qui varie, lorsque les faisceaux d'électrons se déplacent dans ladite seconde direction au travers de la grille d'écran et ainsi en succession à travers ses ouvertures pour frapper sur l'écran de génération d'images pour créer une image sur l'écran de génération d'images, entre une première tension lorsque les faisceaux se déplacent au travers de chacune desdites ouvertures dans la grille d'écran et une seconde tension lorsque les faisceaux se déplacent au travers de la grille d'écran dans la seconde direction entre des ouvertures successives ;
générer à partir dudit signal (V_{d}) variant avec le temps un signal de commande (Vₚ) à partir duquel un signal de correction est dérivé pour son application au moyen de déflexion pour ajuster le chemin d'au moins l'un des faisceaux d'électrons et ajuster ainsi la convergence des faisceaux d'électrons sur la grille d'écran ; de sorte que
ledit signal de correction est généré en maximisant de façon dynamique la différence entre lesdites première et seconde tensions de sorte que l'on fait converger de façon précise la pluralité de faisceaux d'électrons sur la grille d'écran.

22. Procédé selon la revendication 21, dans lequel ladite première direction de répartition des ouvertures de grille d'écran et ladite seconde direction de mouvement de balayage sensiblement continue des faisceaux d'électrons sont sensiblement perpendiculaires.
